# EUROPÄISCHE PATENTSCHRIFT

(11) **EP 2 678 926 B1**
(45) Veröffentlichungstag und Bekanntmachung des Hinweises auf die Patenterteilung: **29.07.2015**
(21) Anmeldenummer: 12709026.4
(22) Anmeldetag: 16.02.2012
(51) Int. Cl.: H02M 1/32, H01H 79/00, H02H 7/122, H02M 7/219, H01H 33/02

(54) **SUBMODUL EINES MODULAREN MEHRSTUFENUMRICHTERS**
SUB-MODULE OF A MODULAR MULTI-STAGE CONVERTER
SOUS-MODULE D'UN CONVERTISSEUR MODULAIRE À ÉTAGES MULTIPLES

(30) Priorität: 25.02.2011 DE 102011004733
(43) Veröffentlichungstag der Anmeldung: 01.01.2014
(73) Patentinhaber: Siemens Aktiengesellschaft, 80333 München (DE)
(72) Erfinder: EULER, Ingo, 91056 Erlangen (DE); GAMBACH, Herbert, 91080 Uttenreuth (DE); SCHREMMER, Frank, 90768 Fürth (DE); WAHLE, Marcus, 90766 Fürth (DE)
(86) Internationale Anmeldenummer: PCT/EP2012/052678
(87) Internationale Veröffentlichungsnummer: WO 2012/113704

(56) Entgegenhaltungen:
- EP-A1- 0 243 812
- EP-A2- 1 313 206
- DE-A1- 3 444 003
- DE-A1-102007 018 344

## Beschreibung

Die Erfindung betrifft ein Submodul für einen modularen Mehrstufenumrichter mit einem unipolaren Energiespeicher und eine parallel zum Energiespeicher geschaltete Leistungshalbleiterreihenschaltung, in der zwei ein- und abschaltbare Leistungshalbleiterschalter mit gleicher Durchlassrichtung in Reihe geschaltet sind, wobei jedem ein- und abschaltbaren Leistungshalbleiterschalter eine Freilaufdiode gegensinnig parallel geschaltet ist, einer ersten Anschlussklemme, die mit dem Energiespeicher verbunden ist, einer zweiten Anschlussklemme, die mit einem Potenzialpünkt zwischen den einund abschaltbaren Leistungshalbleiterschaltern und deren Freilaufdioden verbunden ist, und einem Überbrückungsschalter in einem Überbrückungszweig, der die Anschlussklemmen miteinander verbindet.

Ein solches Submodul ist beispielsweise aus der DE 10 2005 040 543 A1 bereits bekannt. Dort ist ein so genannter modularer Mehrstufenumrichter offenbart, der eine Anzahl von Phasenmodulen aufweist. Jedes Phasenmodul verfügt über einen mittigen Wechselspannungsanschluss zum Anschluss der Phasen eines Wechselspannungsnetzes. Ferner verfügt das Phasenmodul über zwei endseitige Gleichspannungsanschlüsse. Zwischen dem Wechselspannungsanschluss und jedem der beiden Gleichspannungsanschlüsse erstreckt sich ein Phasenmodulzweig. Jeder Phasenmodulzweig umfasst wiederum eine Reihenschaltung aus zweipoligen Submodulen, von denen jedes einen unipolaren Kondensator als Energiespeicher aufweist. Im Fehlerfall wird die an dem Kondensator abfallende Spannung zu groß, so dass das Submodul zur Vermeidung größerer Schäden überbrückt werden muss. Hierzu ist eine Überbrückungseinheit vorgesehen, die zwischen den beiden Anschlussklemmen jedes Submoduls angeordnet ist. Bei der Überbrückungseinheit handelt es sich um einen ansteuerbaren Leistungshalbleiter.

Aus der deutschen Offenlegungsschrift DE 10 2007 018 344 A1 ist ein Stromrichter mit solchen Submodulen bekannt. Dabei ist der Überbrückungsschalter als eine Vakuumschaltröhre ausgestaltet. Der Bewegkontakt der Vakuumschaltröhre ist mechanisch mit einer Auslöse- und Verklinkungseinheit verbunden, die eine Spule mit einem Joch aufweist.

Aus der Praxis ist bekannt, dass vor dem Kurzschließen eines Submoduls eines modularen Mehrstufenumrichters die Leistungshalbleiterschalter des fehlerhaften Submoduls blockiert, also mit anderen Worten in ihre Sperrstellung überführt werden. Werden die Leistungshalbleiterschalter in einem solchen Submodul jedoch nicht mehr angesteuert, wird der Energiespeicher über die Freilaufdioden des Submoduls bei passender Stromrichtung weiter aufgeladen. Um noch höhere Spannungen am Energiespeicher des Submoduls zu verhindern, werden die Anschlussklemmen bei einer definierten Spannung daher schnell kurz geschlossen. Diese Kurzschlussverbindung muss den über den Mehrstufenumrichter fließenden Strom einschließlich möglicher Stoßströme bis zum nächsten Wartungsintervall sicher führen können.

Beim Überbrücken des Submoduls kann es vorkommen, dass das schnelle Schließen des Überbrückungsschalters einen hartes Abkommutieren des Stromflusses über eine Freilaufdiode bewirkt, so dass es zur Zerstörung der Freilaufdiode mit nachfolgendem Kurzschluss des Kondensator durch einen Lichtbogen über die Freilaufdiode und den geschlossenen Kurzschließer kommt. Beim Rückschwingen der Energie können darüber hinaus auch noch weitere Freilaufdioden des Submoduls zerstört werden, da der Rückschwingstrom nur wenig gedämpft ist und daher immer noch Amplituden und Energien beinhalten kann, die das zulässige Maß für die Freilaufdioden bei weitem übersteigen.

Aufgabe der Erfindung ist es daher, ein Submodul der eingangs genannten Art bereitzustellen, bei dem eine Zerstörung einer oder mehrerer Freilaufdioden sicher vermieden wird.

Diese Aufgabe wird durch die Merkmale des Anspruchs 1 gelöst. Die unabhängige Ansprüche beschreiben bevorzugte Ausgestaltungen der Erfindung.

Erfindungsgemäß ist in dem Strompfad des Kurzschlussstromes von dem positiven Pol oder der positiven Klemme des Energiespeichers zu dessen entgegen gesetztem Pol wenigstens eine Induktivität angeordnet, die so ausgewählt ist, dass zum Einen ein zu schnelles Abkommutieren aufgrund eines zu schnellen Stromanstiegs verhindert wird. Zum Anderen entstehen durch das erfindungsgemäß ausgewählte induktive Bauteil bei Normalbetrieb üblichem Laststrom keine großen Verluste. Durch das oder die induktiven Bauteile kommt es daher zu einem langsameren Abkommutieren des Stromes, wobei es der belasteten Freilaufdioden ermöglicht ist, in ihre Sperrstellung überzugehen und so die Spannung des Energiespeichers auszunehmen. Eine Entladung des Energiespeichers über die besagte Freilaufdiode und den Überbrückungsschalter wird auf diese Weise verhindert. Aus diesem Grunde werden auch die restlichen Teile des Submoduls nicht zerstört. Da erfindungsgemäß hohe Kurzschlussströme und Stoßströme vermieden sind, kann der Überbrückungsschalter für kleinere maximale Stromstärken ausgelegt werden. Dies gilt auch für die restlichen komponenten des Submoduls, die ansonsten den hohen Strömkräften Stand halten müssten, welche durch die hohen Kurzschlussströme hervorgerufen werden. Stromkräfte in diesem Sinne entstehen bei parallelen Strömen, die sich entweder anziehen oder anstoßen können.

Erfindugsgemäß sind induktive Bauteile vorgesehen, die sowohl in jeder der Anschlussklemmen als auch im Überbrückungszweig angeordnet sind.

Durch die Erhöhung der Anzahl der induktiven Bauteile wird erreicht, dass eine noch bessere Kontrolle des Abkommutierens des Ladungsstromes von der den Ladungsstrom führenden Freilaufdiode möglich ist.

Vorteilhafterweise ist wenigstens ein induktives Bauteil als Drosselspule ausgebildet. Drosselspulen sind kostengünstig am Markt erhältlich, so dass auch das entsprechende Submodul kostengünstig bleibt.

Gemäß einer bevorzugten Ausgestaltung der Erfindung ist jedoch wenigstens eines der induktiven Bauteile als Ferritkern ausgestaltet. Ferritkerne sind ebenfalls kostengünstig am Markt erhältlich. Sie können auf einfache Art und Weise auch in bereits bestehende Anlagen eingefügt werden.

Vorteilhafterweise ist der Ferritkern geblecht. Geblechte Ferritkerne reduzieren die Wirbelstromverluste im Ferritkern und verhindern somit eine starke Aufheizung des induktiven Bauteils bei Normalbetrieb.

Weitere Ausführungsbeispiele und Vorteile der Erfindung sind Gegenstand der nachfolgenden Beschreibung von Ausführungsbeispielen, wobei gleiche Bezugszeichen auf gleich wirkende Bauteile verweisen und wobei die
- Figuren 1 und 2: ein Submodul gemäß dem Stand der Technik und
- Figur 3: ein Ausführungsbeispiel des erfindungsgemäßen Submoduls zeigen.

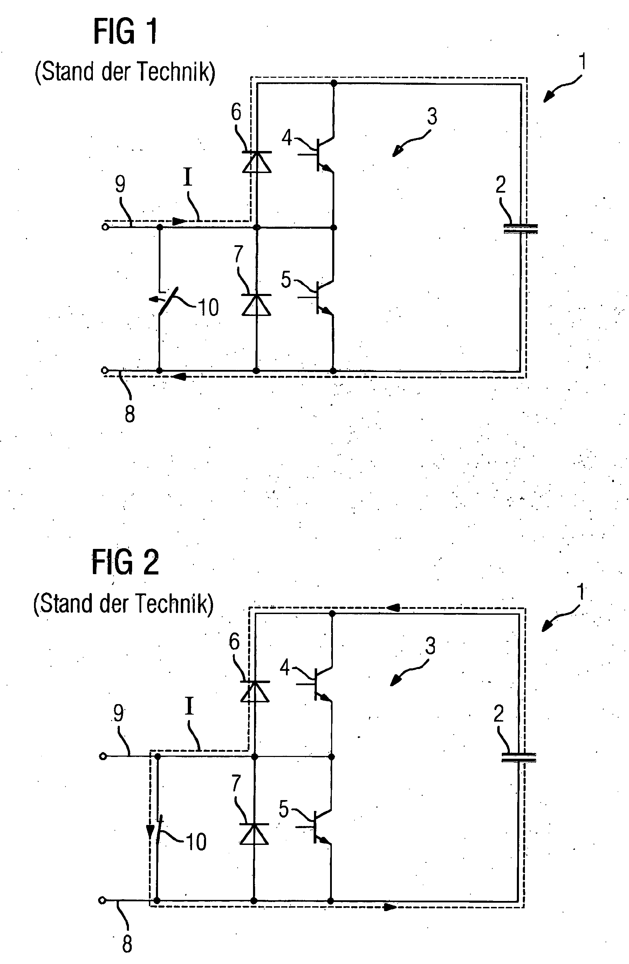

Figur 1 zeigt ein Ausführungsbeispiel eines Submoduls 1 gemäß dem Stand der Technik. Das besagte Submodul 1 verfügt über einen unipolaren Speicherkondensator 2 als Energiespeicher sowie über eine Leistungshalbleiterreihenschaltung 3, die zwei in Reihe zueinander angeordnete ansteuerbare Leistungshalbleiter 4 und 5 mit gleicher Durchlassrichtung aufweist. Bei den ansteuerbaren Leistungshalbleiterschaltern handelt es sich hier um so genannte IGBT-Schalter. Im Rahmen der Erfindung können jedoch andere ein- und abschaltbare Leistungshalbleiterschalter, wie GTO-Schalter oder IGCT-Schalter, eingesetzt werden. Die Leistungshalbleiterschalter 4 und 5 sind mittels eines Steuerungssignals sowohl ein- als auch abschaltbar und für Hochspannungen im Bereich von 1 kV - 10 kV ausgelegt. In ihrer eingeschalteten Stellung ist ein Stromfluss über die Leistungshalbleiterschalter nur in ihrer Durchlassrichtung möglich. In ihrer abgeschalteten Stellung sperren sie den Stromfluss in beiden Richtungen. Jedem der besagten Leistungshalbleiterschalter 4 und 5 ist eine Freilaufdiode 6 und 7 gegensinnig parallel geschaltet. Ferner verfügt jedes Submodul 1 über eine erste Anschlussklemme 8, die hier mit einem Pol des Speicherkondensators 2 verbunden ist. Eine zweite Anschlussklemme 9 ist mit dem Potenzialpunkt zwischen den Leistungshalbleiterschaltern 4 und 5 und somit mit dem Potenzialpunkt zwischen den Freilaufdioden 6 und 7 verbunden.

In Figur 1 ist ferner die Richtung des Stromflusses durch Pfeile verdeutlicht. In dem in Figur 1 gezeigten Zustand fließt ein Ladestrom I von der zweiten Anschlussklemme 9 über die Freilaufdiode 6, den Speicherkondensator 2 und die erste Anschlussklemme 8.

Zwischen den Anschlussklemmen 8 und 9 ist ein Überbrückungsschalter 10 angeordnet. Wird der Überbrückungssclialter 10, wie in Figur 1 angedeutet, geschlossen, wenn der Ladestrom I über die Freilaüfdiode 6 fließt, kommt es zu einem harten Abkommutieren des Stromes, so dass die Freilaufdiode 6 durchlegiert und über den dabei gebildeten Lichtbogen leitend bleibt. Nach Schließen des Überbrückungsschalters 10 ist somit der Speicherkondensator 2 kurzgeschlossen. Es fließen hohe Entladungsströme über den Uberbrückungsschalter 10. Beim Zurückschwingen der Energie wird auch die Freilaufdiode 7 zerstört. Aufgrund der hohen Ströme kommt es zu entsprechend hohen mechanischen Kräften, da sich parallele Ströme je nach Stromrichtung anziehen oder abstoßen.

Figur 2 zeigt die Kurzschlussströme nach dem Schließen des Uberbrückungsschalters 10.

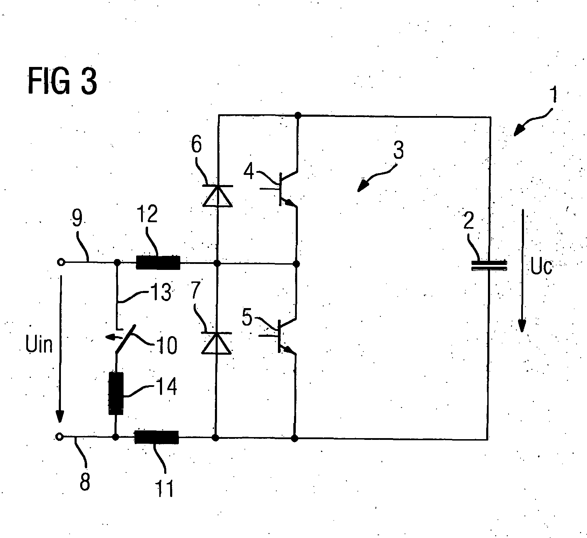

Figur 3 zeigt ein Ausführungsbeispiel des erfindungsgemäßen Submoduls 1, das sich von dem in den Figuren 1 und 2 gezeigten Submodul 1 dadurch unterscheidet, dass in der ersten Anschlussklemme 8 ein induktives Bauteil 11 und in der zweiten Anschlussklemme 9 ein induktives Bauteil 12 angeordnet sind. Ferner ist erkennbar, dass der Uberbrückungsschalter 10 in einem Überbrückungszweig 13 angeordnet ist, wobei in dem Überbrückungszweig 13 ein drittes induktives Bauteil 14 in Reihe zum Überbrückungsschalter geschaltet ist. Die induktiven Bauteile 11, 12 und 14 sind jeweils als geblechte Ferritkerne ausgebildet, die nachträglich durch einfaches Aufklemmen auf die Anschlussklemmen 8, 9 sowie den Überbrückungszweig 13 angebracht wurden. Die Ferritkerne 11, 12 und 14 begrenzen den Stromanstieg und bewirken ein vergleichbar langsameres Abkommutieren des Ladestromes I von der Freilaufdiode 6, so dass diese in der Lage ist, in ihre Sperrstellung überzugehen, um so die Kondensatorspannung U_{c} aufzunehmen. Eine Entladung des Kondensators 2 wird auf diese Art und Weise verhindert.

## Patentansprüche

1. Submodul (1) für einen modularen Mehrstufenumrichter mit
- einem unipolaren Energiespeicher (2) und einer parallel zum Energiespeicher (2) geschalteten Leistungshalbleiterreihenschaltung (3), in der zwei ein- und abschaltbare Leistungshalbleiterschalter (4, 5) mit gleicher Durchlassrichtung in Reihe geschaltet sind, wobei jedem ein- und abschaltbaren Leistungshalbleiterschalter (4, 5) eine Freilaufdiode (6, 7) gegensinnig parallel geschaltet ist,
- einer ersten Anschlussklemme (8), die mit dem Energiespeicher verbunden ist,
- einer zweiten Anschlussklemme (9), die mit einem Potentialpunkt zwischen den ein- und abschaltbaren Leistungshalbleiterschaltern (4, 5) und deren Freilaufdioden (6, 7)verbunden ist, und
- einem Überbrückungsschalter (10) in einem Überbrückungszweig (13), der die Anschlussklemmen (8,9) miteinander verbindet,
**dadurch gekennzeichnet, dass**
- jede Anschlussklemme (8, 9) diodenseitig und der Überbrückungszweig (13) jeweils ein induktives Bauteil (11,12,14) aufweisen derart, dass in einem Strompfad eines Kurzschlussstromes von dem positiven Pol des Energiespeichers (2) über den Überbrückungsschalter (10) zu dem entgegen gesetztem Pol des Energiespeichers (2) wenigstens eine Induktivität angeordnet ist, um eine Zerstörung der Freilaufdioden (6, 7) und eine Entladung des Kondensators (2) beim Abkommutieren des Ladestromes zu vermeiden, und
- das induktive Bauteil eine Drosselspule oder ein Ferritkern ist.

2. Submodul (1) nach Anspruch 1,
**dadurch gekennzeichnet, dass** jedes induktive Bauteil (11, 12, 14) eine Drosselspule ist.

3. Submodul (1) nach Anspruch 1,
**dadurch gekennzeichnet, dass** wenigstens ein induktives Bauteil (11, 12, 14) ein Ferritkern ist.

4. Submodul (1) nach Anspruch 3,
**dadurch gekennzeichnet, dass** der Ferritkern (11, 12, 14) geblecht ist.

## Claims

1. Submodule (1) for a modular multistage converter having
- a unipolar energy store (2) and a power semiconductor series circuit (3) which is connected in parallel with the energy store (2) and in which two power semiconductor switches (4, 5) which can be switched on and off and have the same forward direction are connected in series, a freewheeling diode (6, 7) being connected in opposition to and in parallel with each power semiconductor switch (4, 5) which can be switched on and off,
- a first terminal (8) which is connected to the energy store,
- a second terminal (9) which is connected to a potential point between the power semiconductor switches (4, 5) which can be switched on and off and the freewheeling diodes (6, 7) thereof, and
- a bridging switch (10) in a bridging branch (13) which connects the terminals (8, 9) to one another,
**characterized in that**
- each terminal (8, 9) on the diode side and the bridging branch (13) have in each case an inductive component (11, 12, 14) such that at least one inductance is arranged in a current path of a short-circuit current from the positive pole of the energy store (2) to the opposite pole of the energy store (2) via the bridging switch (10), in order to avoid destruction of the freewheeling diodes (6, 7) and discharging of the capacitor (2) when the load current is commutated, and
- the inductive component is an inductor coil or a ferrite core.

2. Submodule (1) according to Claim 1,
**characterized in that**
each inductive component (11, 12, 14) is an inductor coil.

3. Submodule (1) according to Claim 1,
**characterized in that**
at least one inductive component (11, 12, 14) is a ferrite core.

4. Submodule (1) according to Claim 3,
**characterized in that**
the ferrite core (11, 12, 14) is laminated.

## Revendications

1. Sous-module (1) pour un convertisseur modulaire à plusieurs étages comprenant
- un accumulateur (2) d'énergie unipolaire et un circuit série de semiconducteurs de puissance qui est monté en parallèle à l'accumulateur d'énergie et dans lequel sont montés, en série, deux commutateurs (4, 5) à semiconducteur de puissance de même sens passant, pouvant être passant et bloqués, une diode (6, 7) de roue libre étant montée tête-bêche à chaque commutateur (4, 5) à semiconducteur de puissance pouvant être passant et bloqué,
- une première borne (8) de connexion qui est reliée à l'accumulateur d'énergie,
- une deuxième borne (9) de connexion qui est reliée à un point de potentiel entre les commutateurs (4, 5) à semiconducteur de puissance pouvant être passant et bloqué et leurs diodes (6, 7) de roue libre et
- un interrupteur (10) de shunt dans une branche (13) de court-circuit, qui relie les bornes (8, 9) de connexion entre elles,
**caractérisé en ce que**
- chaque borne (8, 9) de connexion a, du côté de la diode et de la branche (13) de court-circuit, respectivement un composant (11, 12, 14) inductif de manière à monter au moins une inductance dans un trajet d'un courant de court-circuit du pôle positif de l'accumulateur (2) d'énergie au pôle opposé de l'accumulateur d'énergie par l'intermédiaire de l'interrupteur (10) de shunt, pour empêcher une destruction des diodes (6, 7) de roue libre et une décharge du condensateur (2) lors d'une commutation du courant de charge et
- le composant inductif est une bobine de self ou un noyau de ferrite.

2. Sous-module (1) suivant la revendication 1,
**caractérisé en ce que**
chaque composant (11, 12, 14) inductif est une bobine de self.

3. Sous-module (1) suivant la revendication 1,
**caractérisé en ce que**
au moins un composant (11, 12, 14) inductif est un noyau de ferrite.

4. Sous-module (1) suivant la revendication 3,
**caractérisé en ce que**
le noyau (11, 12, 14) de ferrite est feuilleté.
